# EUROPÄISCHE PATENTSCHRIFT

(11) **EP 1 237 971 B1**
(45) Veröffentlichungstag und Bekanntmachung des Hinweises auf die Patenterteilung: **04.08.2010**
(21) Anmeldenummer: 00985095.9
(22) Anmeldetag: 25.11.2000
(51) Int. Cl.: C08G 18/10, C08G 18/12, C09J 175/04

(54) **HAFTUNGSVERSTÄRKER FÜR MONOMERFREIE REAKTIVE POLYURETHANE**
ADHESION PROMOTERS FOR MONOMER-FREE REACTIVE POLYURETHANES
RENFORCATEUR D'ADHERENCE POUR POLYURETHANNES REACTIFS EXEMPTS DE MONOMERES

(30) Priorität: 29.11.1999 DE 19957351; 10.11.2000 DE 10055786
(43) Veröffentlichungstag der Anmeldung: 11.09.2002
(73) Patentinhaber: Henkel AG & Co. KGaA, 40589 Düsseldorf (DE)
(72) Erfinder: KREBS, Michael, 40724 Hilden (DE); LOHR, Christoph, 42117 Wuppertal (DE); BRENGER, Andreas, 40221 Düsseldorf (DE)
(86) Internationale Anmeldenummer: PCT/EP2000/011771
(87) Internationale Veröffentlichungsnummer: WO 2001/040342

(56) Entgegenhaltungen:
- EP-A- 0 340 584
- EP-A- 0 827 995
- DE-A- 19 700 014
- US-A- 6 133 415

## Beschreibung

Die vorliegende Erfindung betrifft Zusammensetzungen auf der Basis von Polyolen und hochmolekularen Diisocyanaten mit einem niedrigen Gehalt an monomeren Diisocyanaten, sowie deren Herstellung und deren Verwendung als Bindemittel für reaktive ein- oder zweikomponentige Kleb-/Dichtstoffe, reaktive Schmelzklebstoffe oder lösungsmittelhaltige Polyurethanklebstoffe.

Reaktive Polyurethan-Kleb-/Dichtstoffe, insbesondere einkomponentigfeuchtigkeitshärtende Systeme, enthalten in der Regel bei Raumtemperatur flüssige Polymere mit Urethangruppen, ggf. Harnstoffgruppen und reaktiven Isocyanatgruppen. Für viele Anwendungsfälle, sind diese Zusammensetzungen lösungsmittelfrei und sehr hochviskos und/oder pastös, sie werden bei Raumtemperatur oder bei leicht erhöhter Temperatur zwischen etwa 50°C und etwa 100°C verarbeitet.

Reaktive, einkomponentige, feuchtigkeitshärtende Polyurethan-Schmelzklebstoffe sind feuchtigkeitshärtende bzw. feuchtigkeitsvemetzende Klebstoffe, die bei Raumtemperatur fest sind und in Form ihrer Schmelze als Klebstoff appliziert werden, und deren polymere Bestandteile Urethangruppen sowie reaktionsfähige Isocyanatgruppen enthalten. Durch das Abkühlen dieser Schmelze nach dem Auftrag und Fügen der zu verbindenden Substrat-Teile erfolgt zunächst eine rasche physikalische Abbindung des Schmelzklebstoffes durch dessen Erstarren. Daran schließt sich eine chemische Reaktion der noch vorhandenen Isocyanatgruppen mit Feuchtigkeit aus der Umgebung zu einem vernetzten unschmelzbaren Klebstoff an. Reaktive Schmelzklebstoffe auf der Basis von Isocyanat-terminierten Polyurethanprepolymeren sind z.B. bei H.F. Huber und H. Müller in "Shaping Reactive Hotmelts Using LMW Copolyesters", Adhesives Age, November 1987, Seite 32 bis 35 beschrieben.

Kaschierklebstoffe können entweder ähnlich aufgebaut sein wie die reaktiven Schmelzklebstoffe oder sie werden als einkomponentige Systeme aus der Lösung in organischen Lösungsmitteln appliziert, eine weitere Ausführungsform besteht aus zweikomponentigen lösungsmittelhaltigen oder lösungsmittelfreien Systemen, bei denen die polymeren Bestandteile der einen Komponente Urethangruppen sowie reaktionsfähige Isocyanatgruppen enthalten und, bei den zweikomponentigen Systemen, enthält die zweite Komponente Polymere bzw. Oligomere mit Hydroxylgruppen, Aminogruppen, Epoxigruppen und/oder Carboxylgruppen. Bei diesen zweikomponentigen Systemen werden die Isocyanat-gruppenhaltige Komponente und die zweite Komponente unmittelbar vor der Applikation gemischt, im Normalfall mit Hilfe eines Misch- und Dosiersystems.

Reaktive Polyurethan-Kleb-/Dichtstoffe zeichnen sich durch ein sehr hohes Leistungsprofil aus. Daher konnten in den letzten Jahren zunehmend neue Anwendungen für diese Kleb-/Dichtstoffe erschlossen werden. Zusammensetzungen für derartige Klebstoffe und/oder Dichtstoffe sind bereits aus sehr vielen Patentanmeldungen und sonstigen Veröffentlichungen bekannt.

Neben vielen Vorteilen weisen diese Polyurethan-Zusammensetzungen auch einige systembedingte Nachteile auf. Einer der gravierendsten Nachteile ist der Restmonomergehalt an Isocyanaten, insbesondere der flüchtigeren Diisocyanate. Kleb-IDichtstoffe und insbesondere die Schmelzklebstoffe werden bei erhöhter Temperatur verarbeitet. Die Schmelzklebstoffe werden beispielsweise zwischen 100°C und 200°C verarbeitet, Kaschierklebstoffe zwischen Raumtemperatur und 150°C. Schon bei Raumtemperatur weisen flüchtige Isocyanate wie TDI oder IPDI einen nicht zu vernachlässigenden Dampfdruck auf. Dieser merkliche Dampfdruck ist insbesondere bei einem Sprühauftrag besonders gravierend, da hierbei signifikante Mengen an Isocyanatdämpfen über dem Applikationsobjekt auftreten können, die wegen ihrer reizenden und sensibilisierenden Wirkung toxisch sind. Daher müssen Schutzmaßnahmen zur Verhütung von Gesundheitsschäden für die mit der Verarbeitung beauftragten Personen ergriffen werden. Diese Maßnahmen, wie z.B. die Überwachungspflicht der Einhaltung der maximalen Arbeitsplatzkonzentration sind aufwendig. Insbesondere Absaugungsmaßnahmen der Dämpfe an der Entstehungs- und Austrittsstelle sind sehr kostenintensiv und behindern zudem einige Auftragsverfahren, wie insbesondere den Sprühauftrag der reaktiven Polyurethan-Kleb-/Dichtstoffe.

Für die genannten Anwendungsfelder ist daher die Entwicklung von reaktiven Polyurethan-Zusammensetzungen mit einem drastisch reduzierten Anteil an monomeren Diisocyanaten in hohem Maße wünschenswert, da letztere zum Teil erst deren Einsatz bei vielen Applikationen ermöglicht, bei denen der Einsatz aus den oben erläuterten arbeitshygienischen Problemen bisher nicht möglich war.

Nach der Schulz-Flory-Statistik ist bei der Umsetzung von Diisocyanaten mit Isocyanatgruppen etwa gleicher Reaktivität mit hydroxylgruppenhaltigen Verbindungen der verbleibende Gehalt an monomerem Diisocyanat im Reaktionsprodukt vom NCO/OH-Verhältnis der Reaktanden bei der Prepolymer-Synthese abhängig. Bei einem NCO/OH-Verhältnis von 2, wie es häufig für die Prepolymerzusammensetzung notwendig ist, verbleiben etwa 25% des eingesetzten monomeren Diisocyanates als Monomer im Prepolymer. Werden bei einer Prepolymer-Synthese z.B. 10 Gew.% Diphenylmethan-diisocyanat (MDI) bei einem NCO/OH-Verhältnis von 2 eingesetzt, so findet man in Übereinstimmung mit der oben genannten statistischen Abschätzung größenordnungsmäßig etwa 2 Gew.% monomeres MDI im Prepolymeren, Bei 150°C hat das reine MDI bereits einen Dampfdruck von 0,8 mbar, in Zusammensetzungen ist dieser Dampfdruck zwar nach Maßgabe des Raoult'schen Gesetzes niedriger, er ist aber immer noch oberhalb des arbeitshygienisch unbedenklichen Bereiches. Unter den oben beschriebenen Applikationsbedingungen, insbesondere bei einer großflächigen Applikation als Schmelzklebstoff in dünner Schicht, gelangen also erhebliche Mengen des Restmonomers in den darüber liegenden Luftraum und müssen durch Absaugung entfernt werden. Eine signifikante Absenkung des Monomergehaltes um eine Zehnerpotenz durch Verringerung des NCO/OH-Verhältnisses ist in der Praxis in aller Regel nicht durchführbar, weil das durchschnittliche Molekulargewicht dann exponentiell ansteigen würde und die daraus resultierenden Polyurethan-Zusammensetzungen extrem hochviskos würden und nicht mehr zu verarbeiten wären. In der Praxis geht man daher bei der Prepolymer-Synthese auch andere Wege. So wird beispielsweise mit einem ausreichend hohen NCO/OH-Verhältnis synthetisiert und das monomere Diisocyanat nach der Prepolymerisierung in einem zweiten Schritt entfernt, dies kann beispielsweise durch Abdestillieren des nicht umgesetzten monomeren Diisocyanates im Vakuum geschehen oder durch nachträgliche chemische Bindung des monomeren Diisocyanates. So beschreibt die EP-A-316738 ein Verfahren zur Herstellung von Urethangruppen aufweisenden Polyisocyanaten mit einem Urethangruppen-freien Ausgangs-Diisocyanat von maximal 0,4 Gew.% durch Umsetzung von aromatischen Diisocyanaten mit mehrwertigen Alkoholen und anschließender Entfernung des nicht umgesetzten, überschüssigen Ausgangs-Diisocyanats, wobei die destillative Entfernung des überschüssigen Ausgangs Diisocyanat in Gegenwart eines Isocyanatgruppen aufweisenden aliphatischen Polyisocyanats durchgeführt wird.

Die EP-A-0393903 beschreibt ein Verfahren zur Herstellung von Prepolymeren, bei dem in einem ersten Schritt monomeres Diisocyanat mit einem Polyol umgesetzt wird. Anschließend wird ein Katalysator in ausreichender Menge zugegeben, so daß ein erheblicher Teil der restlichen Isocyanat-Funktionalität in Allophanat-Funktionalität übergeführt wird. Nach Erreichen des theoretischen NCO-Gehaltes wird die Reaktion durch rasches Abkühlen und Zusatz von Salicylsäure abgestoppt.

Die WO-95/06124 beschreibt Polyurethan-Zusammensetzungen mit einem niedrigen Anteil an monomeren Diisocyanaten, die durch Umsetzung von Polyolen mit trifunktionellen Isocyanaten und ggf. Zusatz von monofunktionellen Kettenabbrechern hergestellt werden. Nachteilig bei diesem Verfahren ist die geringe Verfügbarkeit von trifunktionellen, niedermolekularen Isocyanaten, insbesondere die trifunktionellen Homologen des Diphenylmethan-diisocyanates sind kommerziell in reiner Form nicht erhältlich.

Die DE 197 00014 beschreibt ein zweistufigen Prozess zur Herstellung von monomerarmen PU-Prepolymeren mit freien NCO-Gruppen, wobei mehrwertige Alkohole mit einem Di-Isocyanat mit unterschiedlichen reaktiven NCO-Gruppen so umgesetzt wird, dass die höher reaktiven NCO-Gruppen abreagieren und ein Umsetzungsprodukt entsteht, dass NCO-Gruppen sowie OH-Gruppen aufweist. Dieses Zwischenprodukt wird danach mit einem großen Überschuss eines reaktiven Diisocyanats umgesetzt werden. Eine Destillation oder eine Abtrennung von flüchtigen Isocyanaten ist nicht beschrieben.

Die US 6,131,415 beschreibt ein Verfahren zum Herstellen an den Endgruppen mit Diisocyanaten umgesetzten Polyolen, wobei das Verhältnis von NCO zu OH-Gruppe zwischen 4:1 bis 100:1 beträgt und wobei die Herstellung von Oligomeren verringert werden soll. Bevorzugt sollen mehr als 90 % des entsprechenden 2:1 Umsetzungsprodukts erhalten werden. Eine weitere Umsetzung mit speziellen Verbindungen um PU-Klebstoffe oder Dichtstoffe zu erhalten wird nicht beschrieben.

In der Arbeit von V.A. Kudishina und E.F. Morgunova, Sin. Fiz.-Khim. Polim. (1970), No. 7, 125-129 werden kalthärtende Polyurethanklebstoffe auf der Basis von hydroxifunktionellen Polyestern bzw. Polyethern und isocyanathaltigen Härtern beschrieben. Bei den isocyanathaltigen Härtern handelt es sich um Umsetzungsprodukte des Toluylendüsocyanates (TDI) bzw. des Diphenylmethan-diisocyanates (MDI) Ethylenglycol bzw. Glycerin. Es wird angegeben, daß diese Härterkomponenten zu einer wesentlichen Verminderung der Toxizität der Klebstoffe führen, obwohl diese noch eine Isocyanatmenge von 1,7 % im Luftraum der entsprechenden Versuchskammer erzeugen. Derartige Arbeitsplatzkonzentrationen an Isocyanaten sind nach heutigen arbeitshygienischen Standards in westlichen Industrieländern nicht mehr tolerierbar.

Trotz des vorgenannten Standes der Technik besteht also weiterhin Bedarf an verbesserten Polyurethan-Zusammensetzungen mit einem niedrigen Anteil an monomeren Diisocyanaten, die sich für den Einsatz als Kleb-/Dichtstoffe, insbesondere für reaktive Schmelzklebstoffe eignen. Dabei sollen insbesondere die eingesetzten Rohstoffe leicht und kostengünstig zugänglich sein und sich leicht umsetzen lassen und das Haftverhalten dem der konventionellen Schmelzklebstoffe zumindest ebenbürtig sein.

Die erfindungsgemäße Lösung der Aufgabe ist den Patentansprüchen zu entnehmen. Sie besteht im Wesentlichen in der Bereitstellung von Umsetzungsprodukten aus Polyolen und einem hochmolekularen Diisocyanat mit einem verminderten Anteil an monomeren Diisocyanaten, wobei das erste möglichst ausschließliche 2:1 Addukt in einer zweiten Stufe mit Polyolen umgesetzt wird.

Eine weitere erfindungsgemäße Lösung der Aufgabe besteht darin, daß den vorgenannten Umsetzungprodukten aus Polyolen und einem hochmolekularen Diisocyanat migrationsfähige Polyisocyanate zu gesetzt werden, die einen wesentlich geringeren Dampfdruck haben als z.B. das monomere Diphenylmethandiisocyanat (MDI).

Ein weiterer Gegenstand der vorliegenden Erfindung ist ein Verfahren zur Herstellung derartigen Umsetzungsprodukte aus Polyolen und einem hochmolekularen Diisocyanate. Dabei wird in einem ersten Schritt die Diolkomponente mit einem durchschnittlichen Molekulargewicht (Zahlenmittel Mn) kleiner als 2000, insbesondere kleiner als 1500 mit einem großen stöchiometrischen Überschuß eines monomeren Diisocyanats mit einem Molekulargewicht kleiner als 500 zu einem hochmolekularen Diisocyanat umgesetzt. Nach dieser Umsetzung wird, ggf. durch Zugabe eines Nichtlösers, das hochmolekulare Diisocyanat aus dem Reaktionsgemisch ausgefällt und durch Filtration oder Zentrifugieren von nicht umgesetztem Diisocyanat befreit. In einem nachfolgenden zweiten Schritt wird dieses hochmolekulare Diisocyanat mit einem Polyol umgesetzt, so daß ein reaktives Prepolymer mit Isocyanat-Endgruppen entsteht, das einen sehr geringen Gehalt an monomeren Diisocyanaten mit einem Molekulargewicht kleiner als 500 aufweist. In einer bevorzugten Ausführungsform wird diesem reaktiven Prepolymer mit sehr geringem Gehalt an monomeren flüchtigen Diisocyanaten anschließend mindestens ein migrationfähiges Polyisocyanat mit einem niedrigen Dampfdruck zugesetzt.

Ein weiteres Verfahren zur Herstellung derartiger Zusammensetzungen besteht darin, daß nach dem ersten Schritt der Umsetzung der Diolkomponente mit dem monomeren Diisocyanat, das überschüssige monomere Diisocyanat destillativ aus dem Reaktionsgemisch entfernt wird oder durch selektive Extraktion aus dem Reaktionsgemisch entfernt wird und danach in einem zweiten Schritt ebenfalls dieses hochmolekulare Diisocyanat mit einem Polyol zu einem reaktiven Prepolymer mit Isocyanat-Endgruppen umgesetzt wird. Auch bei einem derartig gereinigten Prepolymer mit Isocyanat-Endgruppen wird für erfindungsgemäße Klebstoffanwendungen in einer bevorzugten Ausführungsform mindestens ein migrationfähiges Polyisocyanat mit wesentlich geringerem Dampfdruck als MDI zugesetzt.

Monomere Diisocyanate im Sinne dieser Erfindung sind solche aromatischen, aliphatischen oder cycloaliphatischen Diisocyanate, deren Molekulargewicht kleiner als 500 ist und die ausgewählt sind aus der Gruppe aller Isomeren des Toluylendüsocyanats (TDI) entweder in isomerenreiner Form oder als Mischung mehrerer Isomerer, Naphthalin-1,5-diisocyanat (NDI), Diphenylmethan-4,4'-diisocyanat (MDI), Diphenylmethan-2,4'-diisocyanat sowie Mischungen des 4,4'-Diphenylmethandiisocyanats mit dem 2,4'-Isomeren, Xylylen-diisocyanat (XDI), 4,4'-Dicyclohexylmethandlisocyanat (H₁₂MDI), 1-Isocyanatomethyl-3-Isocyanato-1,5,5-trimethyl-cyclohexan (Isophorandiisocyanat. IPDI), Cyclohexan-1.4-diisocyanat, hydriertes Xylylen-diisocyanat (H₆XDI), 1-Methyl-2,4-diisocyanato-cyclohexan, m- oder p-Tetramethylxylendiisocyanat (m-TMXDI, p-TMXDI) und Hexan-1 ,6-diisocyanat (HDI).

Diese monomeren Diisocyanate werden In einem ersten Reaktionsschritt mit niedermolekularen Diolen zu hochmolekularen Diisocyanaten umgesetzt. Die hierfür verwendeten Diole haben ein durchschnittliches Molekulargewicht (Zahlenmittel Mn) kleiner als 2000, vorzugsweise kleiner als 1500. Maßgeblich für das Zahlenmittel ist die OH-Zahl des Diols, bestimmt nach DIN 53240.

Die Diole sind ausgewählt aus C2-C18-Alkandiole beispielsweise Ethylenglycol, 1,2-Propandiol, 1,3-Propandial, 2,2-Dimethld-1,3-propandiol, 2-Methylpropandiol, 1,6-Hexandiol, 2,4,4-Trimethylhexandlol-1,6, 2,2,4-Trimethylhexandiol-1,6, 1,4-Cyclohexandimethanol; Diethylenglycol, Triethylenglycol, Tetraethylenglycol, Dipropylenglycol, Tripropylenglycol, Tetrapropylenglycol, Poly(oxytetramethylen)glycol mit einem Molekulargewicht bis zu 650, Alkoxylierungsprodukte des Bisphenols A, Alkoxylierungsprodukte des Bisphenols F, der isomeren Dihydroxyanthracene, der Isomeren Dihydroxynaphthaline, des Brenzkatechins, des Resorcins, des Hydrochinons mit bis zu 8 Alkoxy-Einheiten pro aromatischer Hydroxygruppe oder Mischungen der vorgenannten Diole.

Die Umsetzung der monomeren Diisocyanate mit den Diolen erfolgt dabei in an sich bekannter Weise, ggf. unter Zusatz von aprotischen Lösungsmitteln. Um die Bildung höherer Oligomere zu vermeiden, wird hiertür ein hoher stöchiometrischer Überschuß an Diisocyanaten im Verhältnis zu den eingesetzten Diolen angewendet. Ggf. können an sich bekannte Katalysatoren zur Beschleunigung der Reaktion zwischen der Isocyanatgruppe und der Alkoholgruppe eingesetzt werden. Dabei muss die Reaktion und das stöchiometrische Verhältnis von monomerem Diisocyanat und Diol so gewählt werden, daß ausschließlich ein 2:1 Addukt aus monomeren Diisocyanat und Diol entsteht und die Bildung höherer Oligomerer unterdrückt wird.

Nach Abschluß der Reaktion wird das Umsetzungsprodukt möglichst weitgehend von monomerem Diisocyanat befreit, das so entstandene hochmolekulare Diisocyanat im Sinne dieser Erfindung darf maximal 10, vorzugsweise max. 5 und insbesondere max. 2 Gew.-% monomeres Diisocyanat, bezogen auf das hochmolekulare Diisocyanat, enthalten. Der Gewichts-Anteil des monomeren Diisocyanates wird gaschromatographisch bestimmt. Der Reinigungsschritt kann nach an sich bekannten Verfahren erfolgen. Bei der Verwendung von niederen Alkandiolen hat es sich bewährt, die geringe Löslichkeit des hochmolekularen Diisocyanates in einigen Lösungsmitteln auszunutzen, in dem nach Abschluß der Diol/Diisocyanat-Reaktion ein Nichtlöser für das hochmolekulare Diisocyanat zugefügt wird, der gleichzeitig Löser für das monomere Diisocyanat ist. Dadurch wird das hochmolekulare Diisocyanat aus dem Reaktionsgemisch ausgefällt und durch Filtration oder durch Zentrifugieren von nicht umgesetzten monomerem Diisocyanat befreit. Dieses Verfahren ist insbesondere anzuwenden, wenn die schwerer flüchtigen monomeren Diisocyanate wie beispielsweise das MDI Verwendung finden sollen.

Nichtlöser sind dabei insbesondere unpolare aprotische organische Lösungsmittel wie z.B. Ethylacetat, Chlorbenzol, Xylole, Toluol, oder insbesondere Siedegrenzenbenzine.

Bei der Verwendung von flüchtigen monomeren Diisocyanaten wie z.B. TDI, TMXDI, IPDI, XDI kann das überschüssige monomere Diisocyanat auch destillativ aus dem Reaktionsgemisch entfernt werden. Hierzu erfolgt die Destillation vorzugsweise im Vakuum mit Hilfe eines Dünnschichtverdampfers oder eines Dünnfilmverdampfers. Derartige Destillationsverfahren sind z.B. im Kunststoff-Handbuch Band 7, "Polyurethane", G.W. Becker (Herausgeber), Hanser-Verlag, München, 3. Auflage 1993, Seite 425 beschrieben.

Eine weitere Möglichkeit der Entfernung des monomeren Diisocyanates aus dem Reaktionsgemisch ist die selektive Extraktion des monomeren Diisocyanates, beispielsweise unter Verwendung von überkritischem Kohlendioxyd oder anderen überkritischen aprotischen Lösungsmitteln. Dieses Extraktionsverfahren ist beispielsweise aus der WO-97/46603 bekannt.

Das derartig hergestellte monomerenfreie bzw. monomerenarme hochmolekulare Diisocyanat wird in einem zweiten Reaktionsschritt in an sich bekannter Weise mit Polyolen zu Prepolymeren umgesetzt. Dabei beträgt das NCO/OH-Verhältnis 1,2:1 - 5:1. Da das hochmolekulare Diisocyanat bereits weitestgehend monomerenfrei ist, können im zweiten Reaktionsschritt auch höhere NCO/OH-Verhältnisse bis 10:1 verwendet werden.

Die Polyole sind aus der in Anspruch 1 genannten Gruppe ausgewählt.

Beispiele sind die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure Korksäure, Undecandisäure Dodecandisäure, 3,3-Dimethylglutarsäure, Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-dodecandiol, Dimerfettalkohol, Glycerin, Trimethylolpropan oder deren Mischungen hergestellt werden können. Weitere Beispiele der erfindungsgemäß einzusetzenden Polyole sind die Polyester auf der Basis von ε-Caprolacton, auch "Polycaprolactone" genannt. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxyfunktionellen Polybutadiene, wie sie z.B. unter dem Handelsnamen "Poly-bd" erhältlich sind, können für die efindungsgemäßen Zusammensetzungen als Polyole eingesetzt werden.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestern mit Hydroxy-funktionellen Acrylsäure- und/oder Methacrylsäure-Verbindungen wie Hydroxyethyl(meth)acrylat oder Hydroxypropyl(meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden.

Die Auswahl des Polyols oder der Polyole richtet sich dabei nach der Verwendungsart dieser Kleb-/Dichtstoff-Zusammensetzung. Bei hochviskosen oder pastösen flüssigen Kleb-/Dichtstoffen werden vorzugsweise zumindest überwiegend flüssige Polyole eingesetzt. Bei zweikomponentigen Kleb-/Dichtstoffen kann dabei die eine Komponente ein Prepolymer mit reaktiven Isocyanat-Endgruppen aus den Polyolen enthalten und die zweite Komponente ein hydroxyfunktionelles Polyol oder hydroxyfunktionelles Polyurethan. Es kann aber auch das hochmolekulare Diisocyanat als Härter für eine hydroxyfunktionelle Komponente verwendet werden, wobei die hydroxyfunktionelle Komponente eines oder mehrerer der vorgenannten Polyole enthält.

Bei der Verwendung der erfindungsgemäßen Polyurethan-Zusammensetzungen als reaktive Schmelzklebstoffe werden die Polyolkomponenten so ausgewählt, daß die Zusammensetzung bei Raumtemperatur fest ist. Dies kann einerseits dadurch geschehen, daß feste amorphe und/oder feste kristalline Polyhydroxyverbindungen eingesetzt werden, es kann jedoch auch dadurch geschehen, daß ein erheblicher Anteil an kurzkettigen Polyhydroxyverbindungen mit verwendet wird, da durch die hohe Konzentration an Urethangruppierungen diese Zusammensetzungen ebenfalls bei Raumtemperatur fest sind. Auswahlkriterien für die Polyole finden sich z.B. in dem vorgenannten Aufsatz von H. F. Huber und H. Müller.

Die erfindungsgemäßen Zusammensetzungen können ggf. zusätzlich Katalysatoren enthalten, die die Bildung des Polyurethanprepolymeren bei seiner Herstellung beschleunigen und/oder die die Feuchtigkeitsvemetzung nach der Applikation des Kleb-/Dichtstoffes beschleunigen. Als erfindungsgemäß einsetzbare Katalysatoren eignen sich z.B. die metallorganische Verbindungen des Zinns, Eisens, Titans oder Wismuts wie Zinn(II)salze von Carbonsäuren, z.B. Zinn-II-acetat, -ethylhexoat und -diethylhexoat verwendet werden. Eine weitere Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure. Konkrete Verbindungen sind Dibutyl- und Dioctyl-zinndiacetat,-maleat, -bis-(2-ethylhexoat), -dilaurat, Tributylzinnacetat, Bis(ß-methoxycarbonylethyl)zinndilaurat und Bis(ß-acetyl-ethyl)zinndilaurat.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(ß-methoxycarbonyl-ethyl)zinndidodecylthiolat, Bis(ß-acetyl-ethyl)zinn-bis(2-ethyl-hexylthiolat), Butyl- und Octylzinn-tris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2-ethylhexoat) mit der allgemeinen Formel Rₙ₊₁Sn(SCH₂CH₂OCOC₈H₁₇)₃₋ₙ, wobei R eine Alkylgruppe mit 4 bis 8 C-Atomen ist, Bis(ß-methoxycarbonyl-ethyl)zinn-bis(thioethyfenglykol-2-ethylhexoat), Bis(β-methoxycarbonyl-ethyl)-zinn-bis(thioglykolsäure-2-ethylhexoat), und Bis(β-acetyl-ethyl)zinn-bis(thioethylenglykol-2-ethylhexoat) und Bis(β-acetyl-ethyl)zinn-bis(thioglykolsäure-2-ethylhexoat.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Aminogruppen. Konkret genannt seien: Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und Propoxylierungs-Produkte, Diaza-bicyclo-octan (DABCO), Triethylamin, Dimethylbenzylamin (Desmorapid DB, BAYER), Bisdimethylaminoethylether (Calalyst A 1, UCC), Tetramethylguanidin, Bisdimethylaminomethyl-phenol, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorbomane, oder auch ungesättigte bicyclische Amine, z. B. Diazabicycloundecen (DBU) sowie Texacat DP-914 (Texaco Chemical), N,N,N,N-Tetramethylbutan-1,3-diamin, N,N,N,N-Tetra-methytpropan-1,3-diamin und N,N,N,N-Tetramethylhexan-1,6-diamin. Die Katalysatoren können auch in oligomerisierter oder polymerisierter Form vorliegen, z.B. als N-methyliertes Polyethylenimin.

Ganz besonders bevorzugte Katalysatoren sind jedoch die Derivate des Morpholins. Konkrete Beispiele für geeignete Morpholino-Verbindungen sind Bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Tris(2-(4-morpholino) propyl) amin, Tris(2-(4-morpholino) butyl) amin, Tris(2-(2,6-dimethyl-4-morpholino) ethyl) amin, Tris(2-(2,6-diethyl-4-morpholino) ethyl) amin, Tris(2-(2-methyl-4-morpholino) ethyl) amin oder Tris(2-(2-ethyl-4-morpholino) ethyl) amin, Dimethylaminopropylmorpholin, Bis-(morpholinopropyl)-methylamin, Diethylaminopropylmorpholin, Bis-(morpholino-propyl)-ethylamin, Bis-(morpholinopropyl)-propylamin, Morpholinopropylpyrrolidon oder N-Morpholinopropyl-N'-methyl-piperazin, Dimorpholinodiethylether (DMDEE) oder Di-2,6-dimethylmorpholinoethyl)ether.

Die vorgenannten Morpholin-Derivate weisen eine besonders hohe katalytische Aktivität, insbesondere der Wasser- (Feuchtigkeits-) Isocyanat-Reaktion, auf. Deshalb sind bereits sehr niedrige Katalysatorkonzentrationen hocheffizient für Vernetzung bzw. Aushärtung der Klebstoffe, die Konzentrationen des Katalysators in der Klebstoff-Formulierung können zwischen 0,001 und 2 Gew.%, vorzugsweise zwischen 0,02 und 0,9 Gew.% liegen.

Weiterhin kann die erfindungsgemäße Zusammensetzung ggf. zusätzlich Stabilisatoren, haftvermittelnde Zusätze wie klebrigmachende Harze, Füllstoffe, Pigmente, Weichmacher und/oder Lösungsmittel enthalten.

Als "Stabilisatoren" im Sinne dieser Erfindung sind einerseits Stabilisatoren zu verstehen, die eine Viskositätsstabilität des Polyurethanprepolymeren während der Herstellung, Lagerung bzw. Applikation bewirken. Hierfür sind z.B. monofunktionelle Carbonsäurechloride, monofunktionelle hochreaktive Isocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des ausgehärteten Produktes. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile des Polyurethanprepolymers aus Polyesterbausteinen, können Hydrolyse-Stabilisatoren, z.B. vom Carbodiimid-Typ, eingesetzt werden.

Werden die erfindungsgemäßen Zusammensetzungen als Schmelzklebstoffe, Kaschierklebstoffe oder Kleb-/Dichtstoffe eingesetzt, so können diese noch klebrigmachende Harze, wie z.B. Abietinsäure, Abietinsäureester, Terpenharze, Terpenphenolharze oder Kohlenwasserstoffharze sowie Füllstoffe (z.B. Silikate, Talk, Calciumcarbonate, Tone oder Ruß), Weichmacher (z.B. Phthalate) oder Thixotropiermittel (z.B. Bentone, pyrogene Kieselsäuren, Harnstoffderivate, fibrillierte oder Pulp-Kurzfasern) oder Farbpasten bzw. Pigmente enthalten.

Als haftungsverstärkende Zusätze in der erfindungsgemäßen Ausführungsform eigenen sich insbesondere migrationsfähige Polyisocyanate, wobei diese einen wesentlich geringeren Dampfdruck als MDI aufweisen sollen.

Als migrationsfähige, haftungsverstärkende Polyisocyanate mit wesentlich geringerem Dampfdruck als MDI kommen dabei hauptsächlich Triisocyanate in Frage wie zum Beispiel der Thiophosphor-säure-tris-(p-Isocyanato-Phenylester), das Triphenylmethan-4,4',4"-Triisocyanat sowie insbesondere die verschiedenen isomeren trifunktionellen Homologen des Diphenylmethandiisocyanats (MDI). Zu den letzteren gehören hauptsächlich das Isocyanato-bis-((4-lsocyanatophenyl)-methyl)-benzol, das 2-Isocyanato-4-((3-Isocyanatophenyl)methyl)-1-((4-Isocyanatophenyl)methyl)-benzol, das 4-Iso-cyanato-1,2-bis((4-Isocyanatophenyl)methyl)-benzol, das 1-Isocyanato-4-((2-Isocyanatophenyl)methyl)-2-((3-Isocyana-tophenyl)methyl)benzol, das 4-Isocyanato-α-1-(o-Isocyanatophenyl)-α-3(p-Isocyanatophenyl)-m-Xylol, das 2-Isocyanato-(o-Isocyanatophenyl)-α'(p-Isocyanatophenyl)m-Xylol, das 2-Isocyanato-1,3-bis((2-Isocyanatophenyl)methyl)-benzol, das 2-Isocyanato-1,4-bis((4-Isocyanato-phenyl)methyl)-benzol, das Isocyanato-bis((Isocyanatophenyl)methyl)-benzol, das 1-Isocyanato-2,4-bis((bis((4-Isocyanatophenyl) methyl)-benzol sowie deren Mischungen, gegebenenfalls mit einem geringfügigem Anteil an höherfunktionellen Homologen. Da die trifunktionellen Homologen des Diphenylmethandiisocyanates analog zum Diphenylmethandiisocyanat durch Kondensation von Formaldehyd mit Anilin mit nachfolgender Phosgenierung hergestellt werden, sind im technischen Gemisch der trifunktionellen Homologen des MDI auch noch Anteile an Diisocyanat vorhanden, dieser darf jedoch nicht mehr als 20 Gew. %, bezogen auf die Triisocyanatmischung, betragen und der Anteil an tetra- bzw. höherfunktionellen Isocyanaten nicht mehr als 25 Gew.%.

Weiterhin sind als Triisocyanate auch Addukte aus Diisocyanaten und niedermolekularen Triolen geeignet, insbesondere die Addukte aus aromatischen Diisocyanaten und Triolen wie zum Beispiel Trimethylolpropan oder Glycerin. Auch bei diesen Addukten gelten die oben genannten Einschränkungen bezüglich des Diisocyanatgehaltes und der höherfunktionellen Bestandteile.

Auch aliphatische Triisocyanate wie zum Beispiel das Biuretisierungsprodukt des Hexamethylendiisocyanates (HDI) oder das Isocyanuratisierungsprodukt des HDI oder auch die gleichen Trimerisierungsprodukte des Isophorondiisocyanats (IPDI) sind für die erfindungsgemäßen Zusammensetzungen geeignet, sofern der Anteil an Diisocyanaten <1 Gew. % beträgt und der Anteil an tetra- bzw. höherfunktionellen Isocyanaten nicht mehr als 25 Gew.% ist.

Wegen ihrer guten Verfügbarkeit sind dabei die vorgenannten Trimerisierungsprodukte des HDI und des IPDI besonders bevorzugt.

Die vorgenannten migrationsfähigen Polyisocyanate können dabei entweder direkt bei der Prepolymersynthese mitverwendet werden, sie können jedoch unmittelbar im Anschluß an die Prepolymersynthese in einer sogenannten "Eintopfreaktion" in das noch im Reaktionskessel befindliche Prepolymergemisch eingearbeitet werden. Eine weitere Möglichkeit besteht in einer separaten Zumischung der haftungsverstärkenden, migrationsfähigen Polyisocyanate bei einem späteren Formulierungsschritt.

Bei der Verwendung als Kaschierklebstoff kann zum Erreichen bestimmter zusätzlicher Eigenschaften, wie thermischer und chemischer Beständigkeit noch ein Zusatz von Epoxidharzen, Phenolharzen, Novolaken, Resolen oder Melaminharzen und ähnliches notwendig sein. Außerdem können in diesem Falle die Prepolymeren auch in Lösung hergestellt werden, vorzugsweise in polaren, aprotischen Lösungsmitteln. Die bevorzugten Lösungsmittel haben dabei einen Siedebereich von etwa 50°C bis 140°C. Obwohl auch halogenierte Kohlenwasserstoffe geeignet sind, werden ganz besonders Ethylacetat, Methylethylketon (MEK) oder Aceton bevorzugt.

Die erfindungsgemäßen Kleb-/Dichtstoffzusammensetzungen lassen sich wie die üblichen bekannten Polyurethan-Kleb-/Dichtstoffe einsetzen als reaktiver ein- oder zweikomponentiger Kleb-/Dichtstoff, als reaktiver Schmelzklebstoff oder als lösungsmittelhaltiger Klebstoff in ein- oder zweikomponentiger Form. Wesentlicher Vorteil gegenüber den bekannten Polyurethan-Kleb-/Dichtstoffen ist der signifikant niedriger Anteil an arbeitshygienisch bedenklichen monomeren Diisocyanaten mit einem Molekulargewicht unterhalb 500.

### Beispiele

### 1. Herstellung von hochmolekularen Diisocyanaten

Die monomeren Diisocyanate wurden in Ethylacetat vorgelegt und auf 50°C aufgeheizt. Anschließend wurde die Heizung abgestellt und das entsprechende Diol wurde innerhalb von 10 Minuten zudosiert. Aufgrund der Reaktionswärme heizte sich das Reaktionsgemisch auf ca. 60°C auf. Nach 15 Minuten Reaktionszeit wurde der Ansatz auf 80°C aufgeheizt. Weitere 15 Minuten später wurde der Katalysator zugegeben und die Reaktion weitere 30 Minuten fortgeführt. Als Fällungsmittel für das hochmolekulare Diisocyanat wurden Ethylacetat, Chlorbenzol, Benzin, Aceton, n-Heptan und eingesetzt. Die Eigenschaften der hochmolekularen Diisocyanate sind in der nachfolgenden Tabelle 1 aufgeführt:

**Tabelle 1:**

| Beispiel | Monomeres Diisocyanat | Diol ¹⁾ | molares Verhältnis | Lösungsmittel | Kataysator ²⁾ | Aufarbeitung ³⁾ | Monomergehalt | NCO-Gehalt |
|---|---|---|---|---|---|---|---|---|
| 1 | MDI | Ethylenglycol | 10:2 | Ethylacetat | 2 Tr.DBTL | A1 | < 0,5 % | 14,1 % |
| 2 | MDI | NPG | 10:1 | Ethylacetat | 2 Tr.DBTL | A2 | < 0,8 % | 13,0 % |
| 3 | MDI | Diethylenglycol | 10:1 | Ethylacetat | 2 Tr.DBTL | A1 | < 0,5 % | 13,0 % |
| 4 | MDI | 1,3 Propandiol | 10:1 | Ethylacetat | 2 Tr.DBTL | A1 | < 0,5 % | 13,9 % |
| 5 | MDI | NPG | 10:1 | Xylol | - | A1 | < 0,5 % | 13,1 % |
| 6 | MDI | HPN | 10:1 | Ethylacetat | 2 Tr.DBTL | A1 | < 0,6 % | 11,0 % |
| 7 | MDI | Diethylenglykol | 10:2 | Ethylacetat | 2 Tr.DBTL | A3 | < 0,5 % | 12,7 % |
| 8 | MDI | HPN | 10:2 | Ethylacetat | - | A4 | < 0,5 % | 10,7 % |
| 9 | TDI | Ethylenglykol | 10:1 | Ethylacetat | 2 Tr.DBTL | A5 | < 0,6 % | 19,7 % |
| 10 | MDI | 1,2-Propylenglykol | 10:4 | Ethylacetat | DBTL | A6 | < 0,8 % | 13,2 % |
| 11 | MDI | 1,2-Propylenglykol | 10:2 | Ethylacetat | DBTL | A7 | < 0,6 % | 13,9 % |
| 12 | MDI | 1,2-Propylenglykol | 10:2 | Ethylacetat | DBTL | A8 | < 0,6 % | 19,2 % |

| | | | | | | | | |
|---|---|---|---|---|---|---|---|---|
| Anmerkungen zur Tabelle: 1) NPG: Neopentylglycol, HPN: Hydroxypivalinsäureneopentylglycolester 2) Tr.: Tropfen, DBTL: Dibutylzinndilaurat 3) Aufarbeitungsverfahren: A1: Isolierung nach Ausfällung des Reaktionsgemisches während der Synthese A2: wie A1, anschließend Auskristallisation im Kühlschrank zur Vervollständigung der Fällung A3: wie A1, Filtrat mit Hexan ausgefällt A4: Auskristallisation im Kühlschrank, Fällung mit Hexan A5: wie A1, anschließend Filtrat mit Hexan behandelt A6: mit Benzin ausgefällt und gewaschen A7: mit Benzin ausgefällt und gewaschen und mit Chlorbenzol gewaschen | | | | | | | | |

Wie aus der Tabelle ersichtlich, lassen sich durch nachträgliches Umkristallisieren/Waschen des hochmolekularen Diisocyanates in aprotischen Lösungsmitteln die Monomerreste auf unter 0,5 Gew.% reduzieren.

### 2. Umsetzung der hochmolekularen Diisocyanate mit Polyolen

### Beispiel 13:

Das hochmolekulare Diisocyanat des Beispiels 11 wurde nach bekannter Art mit dem hydroxifunktionellen Polyester Dynacoll 7380 (Fa. Creanova, Polyester aus Dodecandisäure und 1,6-Hexandiol, OH-Zahl 30) umgesetzt (Kennzahl 2,2). Das so entstandene PU-Prepolymer hatte einen NCO-Gehalt von 1,97 Gew.% (theoretisch 2,01 Gew.%) und eine Viskosität von 24,8 Pa.s bei 130°C. Der Restmonomergehalt betrug < 0,1 Gew.%. Dieses Produkt zeigte gute Eigenschaften als reaktiver Schmelzklebstoff.

### Beispiel 14:

Analog zu Beispiel 13 wurde das hochmolekulare Diisocyanat des Beispiels 12 mit Dynacoll 7380 umgesetzt (Kennzahl 2,2). NCO-Gehalt 2,1 Gew.% (theoretisch Gew.%). Auch dieses Produkt zeigte gute Eigenschaften als reaktiver Schmelzklebstoff.

### Beispiel 15 (Vergleich):

Zum Vergleich wurde ein Standard-Prepolymer für einen PU-Schmelzktebstoff aus 4,4'-Diphenylmethandiisocyanat mit Dynacoll 7380 umgesetzt (Kennzahl 2,2). NCO-Gehalt 2,31 Gew.% (theoretisch 2,35 Gew.%) Viskosität 4,5 Pa.s bei 130°C. Der Restmonomergehalt wurde zu 2,8 Gew.% bestimmt.

Die erfindungsgemäßen Zusammensetzungen haben zwar im Vergleich zum Vergleichsprodukt eine etwas höhere Schmelzviskosität, dies beeinträchtigt jedoch nicht Ihren Einsatz als Schmelzklebstoff. Der wesentliche Vorteil gegenüber dem Stand der Technik ist der wesentlich reduzierte Gehalt an monomerem Diisocyanat im erfindungsgemäßen Schmelzklebstoff.

### Beispiel 16:

In analoger Weise wurde aus einem Polypropylenglycol mit Mn= 880 und Diphenylmethandiisocyanat ein hochmolekulares Diisocyanat hergestellt, aus dem anschließend das monomere MDI soweit entfernt wurde, daß ein Restmonomer - Gehalt von 0,1 % resultierte. Aus 100 Teilen einer Polyolmischung für einen Standardpolyurethanschmelzklebstoff (QR 6202, Fa. Henkel) mit einer gemittelten OH-Zahl von 32,5 und 76,5 Teilen des vorgenannten hochmolekularen Diisocyanats wurde ein Schmeizklebstoff hergestellt.

### Beispiel 17:

In analoger Weise wurden aus 100 Teilen einer Polyolmischung mit einer gemittelten Hydroxylzahl 32,5, 6 Teilen Ethylenvinylacetat-Copolymer, (Vinylacetatgehalt 28 %) und 66,7 Teilen des vorgenannten hochmolekularen Diisocyanates ein Schmelzklebstoff hergestellt.

### Beispiel 18:

In den Schmelzklebstoff gemäß Beispiel 16 wurden nachträglich 2 Gew.% Tris-(6-Isocyanatohexyl)-Isocyanurat - HDI Trimer, Restmonomergehalt 0,2 % - eingearbeitet.

### Beispiel 19:

Analog zu Beispiel 18 wurde in den Schmelzklebstoff des Beispiels 2, 2 Gew.% HDI - Trimer eingearbeitet.

### Anwendungstechnische Eignungstests

Die Schmelzklebstoffe der Beispiele 16 und 18 wurden im Vergleich zu einem Standardschmelzklebstoffen des Standes der Technik (PURMELT QR 6202, Fa. Henkel), Vergleichsbeispiel 21, auf ihre Eignung zur Folienummantelung von MDF* (Mitteldichte Faser) getestet. Die Ergebnisse sind in der nachfolgenden Tabelle 2 zusammengefasst.

**Tabelle 2**

| **Verarbeitung:** | **Beispiel 16** | **Beispiel 21** |
|---|---|---|
| | | |
| Walzentemperatur: [°C] | 150 | 150 |
| Fadenziehen: | sehr gut | sehr gut |
| Benetzung: | 1-2 | 1-2 |
| Benetzungsbild: | 1-2 | 1-2 |
| Sonstiges: | | |
| | | |

| **Abprüfung:** | **Beispiel 16** | **Beispiel 21** |
|---|---|---|
| Anfangsfestigkeit PVC-Folie: | 3,5 | 3,88 |
| Anfangsfestigkeit Furnier: | 2,5 | 2,75 |
| Anfangsfestigkeit CPL: | 2,75 | 3,0 |
| | | |
| Adhäsion PVC-Folie: | 1,75 | 1,75 |
| Adhäsion Furnier: | 1,75 | 1,75 |
| Adhäsion CPL: | 1,75 | 1,75 |
| | | |
| Wärmestand PVC-Folie: [°C] | 148,2 | >150 |
| Wärmestand Furnier: [°C] | 150,0 | >150 |
| Wärmestand CPL: [°C] | 148,2 | >150 |
| | | |
| Kältestand PVC-Folie: [°C] | <-30 | <-30 |
| Kältestand Furnier: [°C] | <-30 | <-30 |
| Kältestand CPL: [°C] | <-30 | <-30 |

Dabei erfolgte die Beurteilung der Festigkeiten nach dem Schulnotensystem mit 1 =sehr gut bis 5=mangelhaft.

Wie aus der Tabelle ersichtlich ist, werden die Anfangsfestigkeiten des Klebstoffes gemäß Beispiel 16 als signifikant besser beurteilt, als die eines handelsüblichen Schmelzklebstoffes für den gleichen Anwendungsfall. Lediglich die Wärmestandfestigkeit ist niedriger als beim herkömmlichen Schmelzklebstoff.

Bei Verwendung des erfindungsgemäßen Klebstoffes gemäß Beispiel 18 ist die Anfangsfestigkeit gegenüber dem Vergleichsbeispiel 21 ebenfalls deutlich besser, die Endfestigkeit, d.h. die Wärmestandfestigkeit erreicht Werte > 150 °C und beinhaltet damit eine deutliche Verbesserung gegenüber dem Beispiel 16. D.h. hier ist sowohl die Forderung nach einem sehr niedrigen Gehalt an flüchtigen niedermolekularen Diisocyanaten erfüllt, als auch gutes Haftungs- und Wärmestandverhalten.

Für eine Fensterprofilummantelung (geprimertes PVC-Profil mit PVC-Folie) wurden Schmelzklebstoffe des Beispiels 17 und 19 mit einem Schmelzklebstoff des Standes der Technik für diese Anwendung vergleichend getestet. Bei dem handelsüblichen Schmelzklebstoff des Standes der Technik handelte es sich um PURMELT QR 5300 (Fa. Henkel), Vergleichsversuch 20. Die Testergebnisse sind in der Tabelle 3 zusammengefasst.

**Tabelle 3**

| Beispiel | Profiltemperatur [°C] | Schälfestigkeit [N/mm] nach | | | | | |
|---|---|---|---|---|---|---|---|
| | | 10 min | 1 h | 4 h | 1 d | 2 d | 7 d |
| 17 | 20 | 0,3 | 0,4 | 0,8 | 2,8 | 2,9 | 3,1 |
| 19 | 20 | 0,7 | 1,7 | 1,7 | 3,2 | 3,7 FR | 4,2 FR |
| 20 | 20 | <0,1 | 0,1 | 0,9 | 2,7 | 4,3 FR | 4,7 FR |
| 17 | 53 | 0,6 | 0,9 | 1,0 | 3,2 | 2,9 | 3,1 |
| 19 | 50 | 1,5 | 1,9 | 1,7 | 3,2 | 3,6 FR | 4,3 FR |
| 20 | 50 | 1,1 | 1,3 | 1,4 | 3,6 FR | 3,9 FR | 3,8 FR |

### Bewertung der Ergebnisse:

Der Schmelzkiebstoff gemäß Beispiel 17 zeigt sehr gute Verarbeitungseigenschaften, gute Benetzung auf den Substraten, Fadenziehen beim Schälen und eine etwas höhere Anfangsschälfestigkeit als das Vergleichsbeispiel 20 des Standes der Technik. Im Verlauf der chemischen Härtungsreaktion wird jedoch nicht der erwünschte Folienriss ohne zu Schälen (FR) beim Beispiel 17 erzielt. Beim erfindungsgemäßen Beispiel 19 werden nicht nur hohe Anfangsschälfestigkeiten erzielt, sondern auch der erwünschte Folienriss nach fortgeschrittener Aushärtung des Schmelzklebstoffes. Auch hier bewirkt der erfindungsgemäße haftverbessernde Zusatz deutlich verbesserte Klebstoffeigenschaften, bei gleichzeitiger Abwesenheit von flüchtigen, niedermolekularen monomeren Diisocyanaten.

Aus den vorstehenden Ergebnissen (Tabelle 2+3) wird deutlich, daß die Schmelzklebstoffe gemäß Beispiel 17 zwar hervorragende Eigenschaften in Bezug auf ihren niedrigen Gehalt an monomeren, flüchtigen Diisocyanaten haben, daß ihre Haftungseigenschaften gegenüber handelsüblichen Schmelzklebstoffen auf der Basis konventioneller, niedermolekularer Diisocyanate unterlegen sind. Die Schmelzklebstoff - Zusammensetzungen gemäß Beispiel 19 weisen gleich gute Haftungseigenschaften wie die herkömmlichen Schmelzklebstoffe des Standes der Technik auf, zusätzlich weisen sie den niedrigen Gehalt an flüchtigen monomeren Diisocyanaten auf.

## Patentansprüche

1. Reaktive Polyurethan-Kleb-/Dichtstoff-Zusammensetzung herstellbar durch Umsetzung von Diolen mit einem durchschnittlichen Molekulargewicht (Zahlenmittel Mn) kleiner als 2000 mit einem großen stöchiometrischen Überschuß an einem monomeren Diisocyanat mit einem Molekulargewicht kleiner als 500 zu einem hochmolekularen Diisocyanat, wobei ausschließlich 2:1 Addukte entstehen, Entfernen des nicht umgesetzten monomeren Diisocyanates, so dass dieses hochmolekulare Diisocyanat maximal 10 Gew-% monomeres Diisocyanat enthält, wobei die Diole ausgewählt werden aus C₂- bis C₁₈-Alkandiole einschließlich der Isomeren, Diethylenglycol, Triethylenglycol, Tetraethylenglycol, Dipropylenglycol, Tripropylenglycol, Tetrapropylenglycol, Poly(oxytetramethylen)glycol mit einem Molekulargewicht bis zu 650, Alkoxylierungsprodukte des Bisphenols A, Alkoxylierungsprodukte des Bisphenols F, der isomeren Dihydroxyanthracene, der isomeren Dihydroxynaphthaline, des Brenzkatechins, des Resorcins, des Hydrochinons mit bis zu 8 Alkoxy-Einheiten pro aromatischer Hydroxygruppe oder Mischungen der vorgenannten Diole, und das Isocyanat ausgewählt aus der Gruppe aller Isomeren des Toluylendiisocyanats (TDI), entweder in isomerenreiner Form oder als Mischung mehrerer Isomerer, Naphthalin-1,5-diisocyanat, 4,4' Diphenylmethandiisocyanat, 2,4'-Diphenylmethandiisocyanat sowie deren Mischungen, Xylylen-diisocyanat (XDI), 4,4'-Dicyclohexylmethandiisocyanat (H₁₂MDI), 1 -isocyanatomethyl-3-isocyanato-1, 5,5-trimethyl-diisocyanat (Isophorondiisocyanat, IPDI), Cyclohexan,1,4- diisocyanat, hydriertes Xylylendiisocyanat (H₆XDI), 1 -Methyl-2,4-diisocyanato- cyclohexan, Hexan-1,6 diisocyanate (HDI), m- oder p-Tetramethylxylylendiisocyanat (m-TMXDI, p-TMXDI) und anschließender Umsetzung dieses hochmolekularen Diisocyanates mit Polyolen in einem NCO/OH-Verhältnis von 1,2:1 bis 10:1, und die Polyole ausgewählt werden aus lineare oder verzweigte Polyesterpolyolen, Pols-ε-Caprolactonen, hydroxyfunktionellen Polybutadienen oder deren Hydrierungsprodukte, hydroxyfunktionellen Poly(meth)acrylaten oder Mischungen der vorgenannten Polyole mit einer Molmasse (Zahlenmittel) der Polyole von 400 bis 20000.

2. Zusammensetzung nach Anspruch 1, **dadurch gekennzeichnet, dass** als Polyol ein oder mehrere Polyole verwendet werden, wobei das Zahlenmittel der Molmasse des/der Polyol(e) 1000 bis 6000 beträgt.

3. Zusammensetzung nach Anspruch 1 bis 2, **dadurch gekennzeichnet, dass** die Zusammensetzungen migrationsfähige Polyisocyanate zur Haftungsverstärkung enthalten, wobei, die Polyisocyanate einen niedrigeren Dampfdruck als Diphenylmethandiisocyanat aufweisen, ausgewählt aus Thiophosphor-säure-tris-(p-Isocyanato-Phenylester), Triphenylmethan-4,4', 4"-Triisocyanat, isomere trifunktionelle Homologen des Diphenylmethandiisocyanats (MDI) insbesondere Isocyanato-bis-((4-Isocyanatophenyl)methyl) benzol, 2- Isocyanato-4-((3-Isocyanatophenyl)-methyl)-1 -((4-Isocyanatophenyl)methyl)-benzol, 4-Iso-cyanato-1,2-bis((4-Isocyanatophenyl)methyl)-benzol, 1-isocyanato-4-((2- Isocyanatophenyl)methyl)-2-((3-Isocyanatophenyl)methyl)benzol, 4-Isocyanato-α-1-(o-Isocyanatophenyl)-α-3(p-Isocyanatophenyl)-m-Xylol, 2-Isocyanato-(o-Isocyanatophenyl)-α'(p-Isocyanatophenyl)m-Xylol, 2-Isocyanato-1,3-bis((2- Isocyanatophenyl)methyl)-benzol, 2 Isocyanato-1,4-bis((4-Isocyanato-phenyl)methyl)-benzol, Isocyanato-bis((Isocyanatophenyl) methyl)-benzol, 1-Isocyanato-2,4- bis(bis(4-Isocyanatophenyl)methyl)-benzol, sowie Addukte aus Diisocyanaten und niedermolekularen Triolen, insbesondere die Addukte aus aromatischen Diisocyanaten und Triolen wie zum Beispiel Trimethylolpropan oder Glycerin, das Biuretisierungsprodukt des Hexamethylendiisocyanates (HDI), das Isocyanuratisierungsprodukt des HDI, die Trimerisierungsprodukte des Isophorondiisocyanats (IPDI) oder Mischungen der vorgenannten Polyisocyanate.

4. Verfahren zur Herstellung einer Zusammensetzung gemäß einem der vorhergehenden Ansprüche, **dadurch gekennzeichnet, dass**
a) in einem ersten Schritt die Diolkomponente mit einem stöchiometrischen Oberschuß an monomerem Diisocyanat zu einem hochmolekularen Diisocyanat umgesetzt wird,
b) ggf. durch Zugabe eines Nichtlösers für das hochmolekulare Diisocyanat dieses aus dem Reaktionsgemisch ausgefällt wird,
c) durch Filtration oder Zentrifugieren von nicht umgesetztem monomeren Diisocyanat befreit wird und
d) in einem zweiten Schritt dieses hochmolekulare Diisocyanat mit einem Polyol umgesetzt wird im NCO/OH-Verhältnis 1,2:1 bis 5:1, so dass ein reaktives Prepolymer mit Isocyanat-Endgruppen entsteht.

5. Verfahren zur Herstellung einer Zusammensetzung gemäß einem der vorhergehenden Ansprüche, **dadurch gekennzeichnet, dass**
a) in einem ersten Schritt die Diolkomponente mit einem stöchiometrischen Oberschuß an monomerem Diisocyanat zu einem hochmolekularen Diisocyanat umgesetzt wird,
b) das überschüssige monomere Diisocyanat destillativ aus dem Reaktionsgemisch entfernt wird, und
c) in einem zweiten Schritt dieses hochmolekulare Diisocyanat mit einem Polyol umgesetzt wird im NCO/OH-Verhältnis 1,2: 1 bis 5:1, so dass ein reaktives Prepolymer mit Isocyanat-Endgruppen entsteht.

6. Verfahren zur Herstellung einer Zusammensetzung gemäß einem der vorhergehenden Ansprüche, **dadurch gekennzeichnet, dass**
a) in einem ersten Schritt die Diolkomponente mit einem stöchiometrischen Oberschuß an monomerem Diisocyanat zu einem hochmolekularen Diisocyanat umgesetzt wird,
b) das überschüssige monomere Diisocyanat durch selektive Extraktion aus dem Reaktionsgemisch entfernt wird, und
c) in einem zweiten Schritt dieses hochmolekulare Diisocyanat mit einem Polyol umgesetzt wird im NCO/OH-Verhältnis 1,2: 1 bis 5:1, so dass ein reaktives Prepolymer mit Isocyanat- Endgruppen entsteht.

7. Verfahren nach Anspruch 4 bis 6 **dadurch** gekenntzeichnet, dass das haftungsverstärkende Polyisocyanat gemäß Anspruch 3 direkt im zweiten Schritt bei der Herstellung des reaktiven Prepolymers mit Isocyanat-Endgruppen zugefügt wird.

8. Verfahren nach Anspruch 4 bis 6 **dadurch gekennzeichnet, dass** das haftverstärkende Polyisocyanat unmittelbar im Anschluß an die Prepolymersynthese in das Prepolymergemisch eingearbeitet wird.

9. Verfahren zur Herstellung einer Polyurethan-Klebstoff- Zusammensetzung **dadurch gekennzeichnet, dass** einem reaktiven Prepolymer mit Isocyanat Endgruppen hergestellt nach einem Verfahren gemäß Anspruch 4 bis 6 ein haftverstärkendes Polyisocyanat gemäß Anspruch 3 während der Formulierung der Klebstoff-Zusammensetzung durch Mischung zugefügt wird.

10. Verwendung einer Zusammensetzung nach Anspruch 1 bis 3 als Bindemittel für einen reaktiven ein- oder zweikomponentigen Kleb-/Dichtstoff, reaktiven Schmelzklebstoff oder lösungsmittelhaltigen Klebstoff.

## Claims

1. A reactive polyurethane adhesive/sealant composition which may be produced by conversion of diols with an average (number average Mn) molecular weight of less than 2,000 with a large stoichiometric excess of a monomeric diisocyanate with a molecular weight of less than 500, into a high molecular weight diisocyanate, wherein exclusively 2:1 adducts are formed, by removal of the unconverted monomeric diisocyanate, so that this high molecular weight diisocyanate contains at most 10% by weight of monomeric diisocyanate, wherein the diols are selected from C₂-C₁₈ alkanediols including isomers, diethylene glycol, triethylene glycol, tetraethylene glycol, dipropylene glycol, tripropylene glycol, tetrapropylene glycol, poly(oxytetramethylene)glycol, with a molecular weight up to 650, alkoxylation products of bisphenol A, alkoxylation products of bisphenol F, isomeric dihydroxyanthracenes, isomeric dihydroxynaphthalenes, pyrocatechol, resorcinol, hydroquinone, with up to 8 alkoxy units per aromatic hydroxyl group or mixtures of the aforementioned diols, and the isocyanate is selected from the group of all the isomers of toluylene diisocyanate (TDI), either in a pure isomeric form or as a mixture of several isomers, naphthalene-1,5-diisocyanate, 4,4'-diphenylmethane-diisocyanate, 2,4'-diphenylmethane-diisocyanate, as well as mixtures thereof, xylylene-diisocyanate (XDI), 4,4'-dicyclohexylmethane-diisocyanate (H₁₂MDI), 1-isocyanatomethyl-3-isocyanato-1,5,5-trimethyl-diisocyanate (isophoronediisocyanate, IPDI), cyclohexane-1,4-diisocyanate, hydrogenated xylylene-diisocyanate (H₆XDI), 1-methyl-2,4-diisocyanato-cyclohexane, hexane-1,6-diisocyanate (HDI), m- or p-tetramethylxylylene-diisocyanate (m-TMXDI, p-TMXDI) and followed by conversion of this high molecular weight diisocyanate with polyols in a NCO/OH ratio from 1.2:1 to 10:1, and the polyols are selected from linear or branched polyester polyols, poly-ε-caprolactones, hydroxy-functional polybutadienes or their hydrogenation products, hydroxy-functional poly(meth)acrylates or mixtures of the aforementioned polyols with a molar mass (number average) of the polyols from 400 to 20,000.

2. The composition according to claim 1, **characterized in that** one or more polyols are used as a polyol, wherein the number average of the molar mass of the polyol(s) is from 1,000 to 6,000.

3. The composition according to claim 1 to 2, **characterized in that** the compositions contain polyisocyanates capable of migrating for reinforcing adherence, wherein the polyisocyanate have a lower vapor pressure than diphenylmethane-diisocyanate, selected from thiophosphoric acid tris-(p-isocyanato-phenylester), triphenylmethane-4,4', 4"-triisocyanate, isomeric trifunctional homologs of diphenylmethane-diisocyanate (MDI) in particular isocyanato-bis-((4-isocyanatophenyl)methyl)benzene, 2-isocyanato-4-((3-isocyanatophenyl)-methyl)-1-((4-isocyanatophenyl)methyl)benzene, 4-isocyanato-1,2-bis((4-isocyanatophenyl)methyl)benzene, 1-isocyanato-4-((2-isocyanatophenyl)methyl)-2-((3-isocyanatophenyl)methyl)benzene, 4-isocyanato-a-1-(o-isocyanatophenyl)-a-3(p-isocyanatophenyl)-m-xylene, 2-isocyanato-(o-isocyanatophenyl)-a'-(p-isocyanatophenyl)-m-xylene, 2-isocyanato-1,3-bis((2-isocyanatophenyl)methyl)benzene, 2-isocyanato-1,4-bis((4-isocyanatophenyl)methyl)benzene, isocyanato-bis((isocyanato-phenyl)-methyl)benzene, 1-isocyanato-2,4-bis(bis(4-isocyanatophenyl)methyl)benzene, as well as adducts of diisocyanates and of low molecular weight triols, in particular the adducts of aromatic diisocyanates and triols such as for example trimethylolpropane or glycerol, the biuretization product of hexamethylene diisocyanate (HDI), the isocyanuratization product of HDI, the trimerization products of isophoronediisocyanate (IPDI) or mixtures of the aforementioned polyisocyanates.

4. A method for preparing a composition according to any of the preceding claims, **characterized in that**
a) in a first step, the diol component is converted with a stoichiometric excess of monomeric diisocyanate into a high molecular weight diisocyanate,
b) if necessary, by adding a non-solvent for high molecular weight diisocyanate, the latter is precipitated from the reaction mixture,
c) unconverted monomeric diisocyanate is released therefrom by filtration or centrifugation, and
d) in a second step, this high molecular weight diisocyanate is converted with a polyol in a NCO/OH ratio from 1.2:1 to 5:1, so that a reactive prepolymer with isocyanate end groups is formed.

5. A method for preparing a composition according to any of the preceding claims, **characterized in that**
a) in a first step, the diol component is converted with a stoichiometric excess of monomeric diisocyanate into a high molecular weight diisocyanate,
b) the excess monomeric diisocyanate is removed by distillation from the reaction mixture, and
c) in a second step, this high molecular weight diisocyanate is converted with a polyol in a NCO/OH ratio from 1.2:1 to 5:1, so that a reactive prepolymer with isocyanate end groups is formed.

6. A method for preparing a composition according to any of the preceding claims, **characterized in that**
a) in a first step, the diol component is converted with a stoichiometric excess of monomeric diisocyanate into a high molecular weight diisocyanate,
b) the excess monomeric diisocyanate is removed by selective extraction from the reaction mixture,
c) in a second step, this high molecular weight diisocyanate is converted with a polyol in a NCO/OH ratio from 1.2:1 to 5:1, so that a reactive prepolymer with isocyanate end groups is formed.

7. The method according to claims 4 to 6, **characterized in that** the adherence-reinforcing polyisocyanate according to claim 3 is added directly in the second step in the preparation of the reactive prepolymer with isocyanate end groups.

8. The method according to claims 4 to 6, **characterized in that** the adherence-reinforcing polyisocyanate is directly incorporated into the prepolymer mixture following the prepolymer synthesis.

9. A method for preparing a polyurethane adhesive composition **characterized in that** during the formulation of the adhesive composition, an adherence-reinforcing polyisocyanate according to claim 3 is admixed to a reactive prepolymer with isocyanate end groups prepared in accordance with a method according to claims 4 to 6.

10. The use of a composition according to claims 1 to 3 as a binder for a reactive one- or two-component adhesive/sealant, reactive hot melt adhesive or solvent-containing adhesive.

## Revendications

1. Composition adhésive/d'étanchéité réactive à base de polyuréthane pouvant être préparée par transformation de diols avec un poids moléculaire moyen (moyenne numérique Mn) inférieur à 2000 avec un grand excès stoechiométrique d'un diisocyanate monomère présentant un poids moléculaire inférieur à 500 en un diisocyanate de haut poids moléculaire, avec formation exclusive de produits d'addition 2:1, élimination du diisocyanate monomère non transformé, de manière telle que ce diisocyanate de haut poids moléculaire contient au maximum 10% en poids de diisocyanate monomère, les diols étant choisis parmi les C₂-C₁₈-alcanediols, y compris les isomères, le diéthylèneglycol, le triéthylèneglycol, le tétraéthylèneglycol, le dipropylèneglycol, le tripropylèneglycol, le tétrapropylèneglycol, le poly(oxytétraméthylène)glycol présentant un poids moléculaire jusqu'à 650, les produits d'alcoxylation du bisphénol A, les produits d'alcoxylation du bisphénol F, les dihydroxyanthracènes isomères, les dihydroxynaphtalènes isomères, la pyrocatéchine, le résorcinol, l'hydroquinone comprenant jusqu'à 8 unités alcoxy par groupe hydroxy aromatique ou les mélanges des diols susmentionnés et l'isocyanate étant choisi dans le groupe de tous les isomères du toluylènediisocyanate (TDI), sous forme isomère pure ou sous forme de mélange de plusieurs isomères, le naphtalène-1,5-diisocyanate, le 4,4'-diphénylméthanediisocyanate, le 2,4'-diphénylméthanediisocyanate ainsi que leurs mélanges, le xylylènediisocyanate (XDI), le 4,4'-dicyclohexylméthanediisocyanate (H₁₂MDI), le 1-isocyanatométhyl-3-isocyanato-1,5,5-triméthyldiisocyanate (isophoronediisocyanate, IPDI), le cyclohexane-1,4-diisocyanate, le xylylènediisocyanate hydrogéné (H₆XDI), le 1-méthyl-2,4-diisocyanatocyclohexane, l'hexane-1,6-diisocyanate (HDI), le m-tétraméthylxylylènediisocyanate ou le p-tétraméthylxylylènedüsocyanate (m-TMXDI, p-TMXDI) et transformation consécutive de ce diisocyanate de haut poids moléculaire avec des polyols dans un rapport NCO/OH de 1,2:1 à 10:1, et les polyols sont choisis parmi les polyester-polyols linéaires ou ramifiés, les poly-ε-caprolactones, les polybutadiènes à fonctionnalité hydroxy ou leurs produits d'hydrogénation, les poly(méth)acrylates à fonctionnalité hydroxy ou les mélanges des polyols susmentionnés présentant une masse molaire (moyenne numérique) des polyols de 400 à 20 000.

2. Composition selon la revendication 1, **caractérisée en ce qu'**on utilise comme polyol un ou plusieurs polyols, la moyenne numérique de la masse molaire du/des polyols étant de 1000 à 6000.

3. Composition selon la revendication 1 à 2, **caractérisée en ce que** les compositions contiennent des polyisocyanates aptes à la migration pour le renforcement de l'adhérence, où les polyisocyanates présentent une tension de vapeur inférieure à celle du diphénylméthanediisocyanate, sont choisis parmi l'ester tris-p-isocyanato-phénylique de l'acide thiophosphorique, le triphénylméthane-4,4',4"-triisocyanate, les homologues trifonctionnels isomères du diphénylméthanediisocyanate (MDI), en particulier l'isocyanato-bis-((4-isocyanatophényl)méthyl)-benzène, le 2-isocyanato-4-((3-isocyanatophényl)-méthyl)-1-((4-isocyanatophényl)méthyl)-benzène, le 4-isocyanato-1,2-bis((4-isocyanatophényl)méthyl)-benzène, le 1-isocyanato-4-((2-isocyanatophényl)méthyl)-2-((3-isocyanatophényl)méthyl)benzène, le 4-isocyanato-α-1-(o-isocyanatophényl)-α-3-(p-isocyanatophényl)-m-xylène, le 2-isocyanato-(o-isocyanatophényl)-α'(p-isocyanatophényl)-m-xylène, le 2-isocyanato-1,3-bis((2-isocyanatophényl)méthyl)-benzène, le 2-isocyanato-1,4-bis((4-isocyanatophényl)méthyl)-benzène, l'isocyanatobis((isocyanatophényl)méthyl)-benzène, le 1-isocyanato-2,4-bis(bis(4-isocyanatophényl)méthyl)-benzène, ainsi que les produits d'addition de diisocyanates et de triols de bas poids moléculaire, en particulier les produits d'addition de diisocyanates aromatiques et de triols, tels que par exemple le triméthylolpropane ou le glycérol, le produit de formation de biuret de l'hexaméthylènediisocyanate (HDI), le produit de formation d'isocyanurate du HDI, les produits de trimérisation de l'isophoronediisocyanate (IPDI) ou les mélanges de polyisocyanates susmentionnés.

4. Procédé pour la préparation d'une composition selon l'une quelconque des revendications précédentes, **caractérisé en ce que**
a) dans une première étape, le composant diol est transformé avec un excès stoechiométrique de diisocyanate monomère en un diisocyanate de haut poids moléculaire,
b) le cas échéant par addition d'un agent de non-solubilisation pour le diisocyanate de haut poids moléculaire, celui-ci est séparé par précipitation du mélange réactionnel,
c) libéré par filtration ou centrifugation du diisocyanate monomère non transformé et
d) dans une deuxième étape, ce diisocyanate de haut poids moléculaire est transformé avec un polyol dans un rapport NCO/OH de 1,2:1 à 5:1, de manière telle qu'il se forme un prépolymère réactif avec des groupes terminaux isocyanate.

5. Procédé pour la préparation d'une composition selon l'une quelconque des revendications précédentes, **caractérisé en ce que**
a) dans une première étape, le composant diol est transformé avec un excès stoechiométrique de diisocyanate monomère en un diisocyanate de haut poids moléculaire,
b) le diisocyanate monomère en excès est éliminé par distillation du mélange réactionnel, et
c) dans une deuxième étape, ce diisocyanate de haut poids moléculaire est transformé avec un polyol dans un rapport NCO/OH de 1,2:1 à 5:1, de manière telle qu'il se forme un prépolymère réactif avec des groupes terminaux isocyanate.

6. Procédé pour la préparation d'une composition selon l'une quelconque des revendications précédentes, **caractérisé en ce que**
a) dans une première étape, le composant diol est transformé avec un excès stoechiométrique de diisocyanate monomère en un diisocyanate de haut poids moléculaire,
b) le diisocyanate monomère en excès est éliminé par extraction sélective du mélange réactionnel, et
c) dans une deuxième étape, ce diisocyanate de haut poids moléculaire est transformé avec un polyol dans un rapport NCO/OH de 1,2:1 à 5:1, de manière telle qu'il se forme un prépolymère réactif avec des groupes terminaux isocyanate.

7. Procédé selon la revendication 4 à 6, **caractérisé en ce que** le polyisocyanate renforçant l'adhérence selon la revendication 3 est ajouté directement dans la deuxième étape lors de la préparation du prépolymère réactif avec des groupes terminaux isocyanate.

8. Procédé selon la revendication 4 à 6, **caractérisé en ce que** le polyisocyanate renforçant l'adhérence est incorporé immédiatement après la synthèse du prépolymère dans le mélange de prépolymères.

9. Procédé pour la préparation d'une composition adhésive à base de polyuréthane, **caractérisé en ce qu'**on ajoute à un prépolymère réactif présentant des groupes terminaux isocyanate préparé selon un procédé selon la revendication 4 à 6 un polyisocyanate renforçant l'adhérence selon la revendication 3 pendant la formulation de la composition adhésive par mélange.

10. Utilisation d'une composition selon la revendication 1 à 3 comme liant pour un adhésif réactif/une masse d'étanchéité réactive à un ou deux composants, un adhésif thermofusible réactif ou un adhésif contenant un solvant.
